Europäisches Patentamt

**European Patent Office**

Office européen des brevets

(11) Numéro de publication: **0 064 069**
**B1**

(12) **FASCICULE DE BREVET EUROPEEN**

(45) Date de publication du fascicule du brevet:
**18.07.84**

(21) Numéro de dépôt: **81903015.6**

(22) Date de dépôt: **06.11.81**

(86) Numéro de dépôt international:
**PCT/CH 81/00121**

(87) Numéro de publication internationale:
**WO 82/01496 (13.05.82** Gazette 82/12)

(51) Int. Cl.³: **B 23 P 1/08**

(54) **DISPOSITIF POUR ORIENTER UNE TETE DE GUIDAGE D'UNE MACHINE A DECOUPER PAR ELECTRO-EROSION.**

(30) Priorité: **06.11.80 CH 8237/80**

(43) Date de publication de la demande:
**10.11.82 Bulletin 82/45**

(45) Mention de la délivrance du brevet:
**18.07.84 Bulletin 84/29**

(84) Etats contractants désignés:
**AT DE FR GB LU NL SE**

(56) Documents cités:
**FR - A - 2 366 094**
**US - A - 4 250 371**

(73) Titulaire: **ATELIERS DES CHARMILLES S.A., 109 rue de Lyon, CH-1203 Genève (CH)**

(72) Inventeur: **DELPRETTI, Roger, 6D, ch. de Poussy, CH-1214 Vernier (CH)**

(74) Mandataire: **Ardin, Pierre et al, PIERRE ARDIN & CIE 22, rue du Mont-Blanc, CH-1211 Genève 1 (CH)**

EP 0 064 069 B1

BUNDESDRUCKEREI BERLIN

## Description

On connait déjà des dispositifs pour orienter une tête d'injection et de guidage d'une électrode-fil dans une machine à découper une électrode pièce par décharges électriques érosives, cette machine comprenant un support pour deux guides de l'électrode-fil, un support pour la pièce à découper, des moyens pour produire un déplacement relatif entre ces supports afin d'obtenir la forme désirée, de la découpe, des moyens permettant de déplacer la tête de guidage par rapport à son support dans des directions tranversales à l'axe longitudinal de l'électrode-fil et des moyens pour orientier, à partir de ces déplacements transversaux, la tête suivant l'axe de la portion de fil comprise dans la zone d'usinage.

Un dispositif de ce genre est décrit par exemple dans le brevet français 2 454 869. Ces dispositifs sont en général compliqués et font appel à des moyens électroniques pour le calcul de l'orientation à donner à la tête de guidage.

La présente invention a pour but de fournir un dispositif d'orientation d'une tête de guidage, de construction simple et compacte, dans lequel l'orientation correcte de la tête est obtenue par une disposition purement mécanique à partir de la commande des déplacements de la table à mouvements croisés, caractérisé en ce que la tête de guidage déplaçable est montée sur un plateau articulé par un joint universel autour d'un point fixe par rapport au support prévu pour le fil-électrode, ce plateau étant solidaire de deux doigts prenant appui respectivement contre deux surfaces inclinées stationnaires par rapport au dit support, ces surfaces étant orientées de façon que tout déplacement transversal du plateau provoque un déplacement angulaire de la tête de guidage orientable, pour la maintenir toujours dirigée suivant l'axe de ladite portion du fil.

Le dessin annexé représente schématiquement et à titre d'exemple, une forme d'exécution du dispositif objet de l'invention.

La fig. 1 est une vue explicative.

La fig. 2 est une vue latérale d'une machine à électro-érosion.

La fig. 3 est une coupe à plus grande échelle d'une partie de la machine selon la fig. 2.

La fig. 4 est une schéma illustrant le fonctionnement du mécanisme selon la fig. 3.

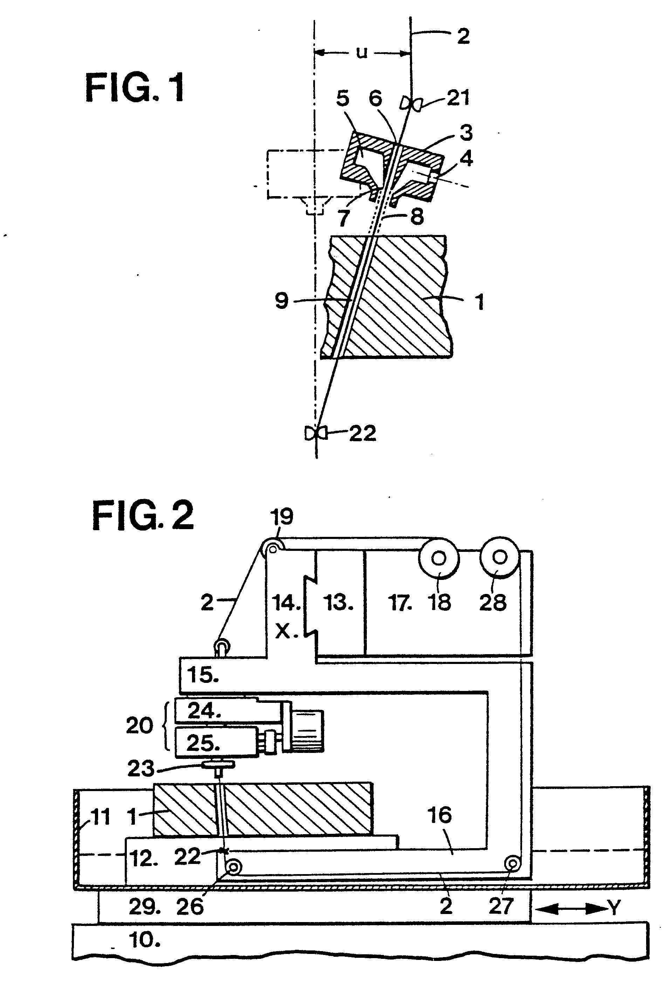

La fig. 1 montre une pièce-électrode 1 à découper au moyen d'un fil électrode 2 passant sur deux guides 21 et 22 disposés de part et d'autre de la pièce 1. Une buse 3 est disposée de façon à entourer le fil 2. Cette buse présente une entrée 4 pour l'amenée d'un fluide diélectrique, cette entrée aboutissant à une chambre annulaire 5 entourant un passage 6 pour le fil 2. Le fluide amené dans la chambre 5 s'échappe par un passage annulaire 7 pour former un jet 8 entourant le fil et dirigé en direction de la zone d'usinage 9. L'ensemble de la buse 3 et du guide 21 constituent une tête de guidage et d'injection.

Lorsque le guide supérieur est dans la position P, la buse 3 occupe la position représentée en traits interrompus. Lorsque le guide est déplacé d'une distance U pour passer de la position P à la position P', la buse doit présenter une inclinaison correspondant à celle du fil, afin que le jet de fluide d'usinage reste coaxial au fil.

La fig. 2 est une vue latérale avec coupes partielles d'une machine à découper par électro-érosion. Cette machine comprend un bâti 10 portant une cuve 11 dans laquelle la pièce 1 est fixée sur des supports 12. Le bâti 10 porte une traverse 13 formant coulisse pour une pièce 14 de guidage de l'électrode-fil 2. Cette pièce 14, en forme d'étrier présente un bras supérieur 15 et un bras inférieur 16.

Un magasin 17 porte une bobine débitrice 18 fournissant le fil 2 qui constitue l'électrode pour le découpage de la pièce 1. Ce fil passe sur des galets 19, guis dans un support 20 pour la tête d'injection et de guidage 23 qui est constitué, comme illustré schématiquement à la fig. 1 par un ensemble d'une buse 3 et d'un guide 21. Le support constitue une table à mouvements croisés 20 comprenant deux plateaux 24 et 25 déplaçables dans deux directions non confondues, généralement orthogonales entre elles. Cette table permet de déplacer la ttete 23 par rapport au bras 15 pour donner au fil 2, dans la zone d'usinage 9, toute inclinaison désirée, ceci dans le but d'obtenir des découpes à parois inclinées.

Après passage sur le guide inférieur 22, le fil 2 passe sur des galets 26 et 27 pour venir s'enrouler sur une bobine débitrice 28 portée par le magasin 17. Des moyens conventionnels permettent de déplacer un support 29 de la cuve 11 dans une direction Y et la pièce 14 sur la traverse glissière 13 dans une direction X perpendiculaire au plan du dessin, le combinaison de ces deux déplacements permettant d'obtenir la trajectoire désirée pour la découpe de la pièce 1.

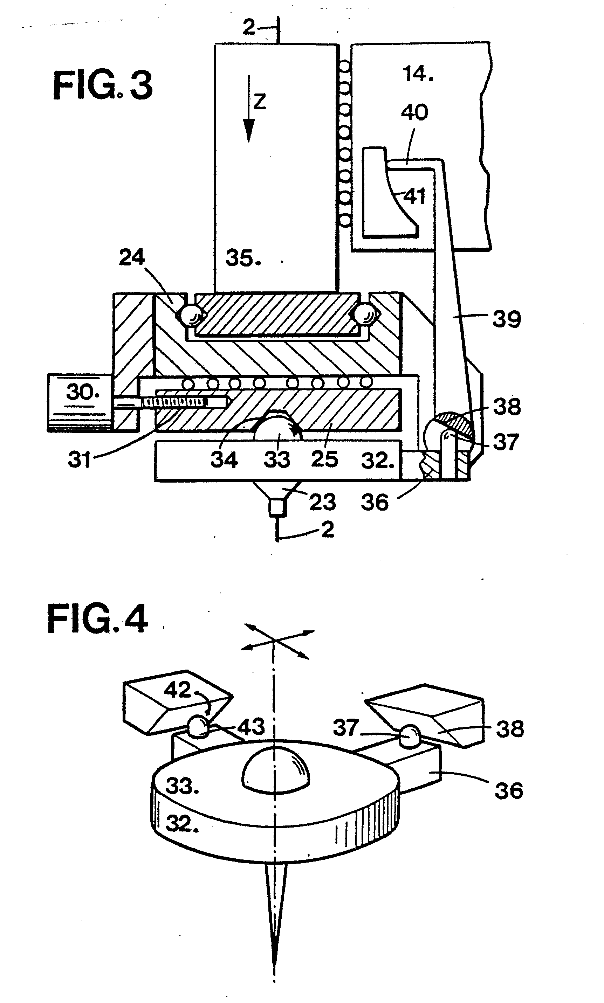

La fig. 3 montre en coupe les moyens permettant d'incliner la tête 23 de guidage et d'injection en fonction des déplacements relatifs des plateaux 24 et 25 de la table à mouvements croisés. Le déplacement du plateau 25 par rapport au plateau 24 est commandé par un moteur 30, par exemple du type pas à pas, qui est fixé au plateau 24 et dont l'arbre porte une portion filetée 31 engagée dans un alésage fileté du plateau 25.

La tête 23 est portée par un plateau 32 muni d'une surface d'appui hémisphérique 33 formant une portion de rotule engagée dans un trou conique 34 du plateau 25.

Le plateau 32 est sollicité vers le plateau 25 par des ressorts non représentés, afin de maintenir l'hémisphère 33 engagée dans le trou 32. Il y a lieu de remarquer que dans cette forme d'exécution la table à mouvements croisés est portée par une pièce 35 déplaçable vertivalement suivant la direction Z par rapport à la pièce de guidage 14. Ce déplacement permet de régler la distance entre la tête 23 et le guide inférieur 22 en fonction de l'épaisseur de la pièce 1. Ce déplacement est commandé par des moyens non représentés mais bien connus dans la technique. Le plateau 32 présente un prolongement latéral 36 muni d'un doigt 37 qui prend appui contre une rampe 38 montée pivotante sur le plateau 24. Cette rampe 38 est solidaire d'un bras 39 dont l'extrémité supérieure recourbée 40 formant palpeur prend appui contre un profil de came 41 solidaire de la pièce 14.

Pour effectuer le déplacement U mentionné en référence à la fig. 1, le plateau 25 est déplacé vers la gauche ou vers la droite de la fig. 3 par le moteur 30. Il en résulte un déplacement correspondant entre le doigt 37 et la rampe 38, ce qui transmet au plateau 32 et à la tête 33, une inclinaison telle que la tête de guidage et d'injection reste sensiblement coaxiale à la portion de fil 2 comprise dans la zone d'usinage 9.

Comme on le voit bien à la eig. 1, l'inclination a donner à la tête de guidage dépend de la distance entre cette tête de guidage et le guide inférieur 22. Lorsque cette distance diminue, par suite d'un déplacement vers le bas de la pièce 35, le bras 39 se déplace par rapport au profil de came 41 et l'inclinaison de la rampe 38 augmente, de sorte que l'inclinaison de la tête 23 varie dans un plus grand rapport en fonction des déplacements du plateau 25.

Comme illustré schématiquement à la fig. 4, le plateau 32 coopère avec une deuxième rampe 42 par l'intermédiaire d'un doigt 43, ceci afin de tenir compte du déplacement du plateau 24 qui ont lieu dans une direction perpendiculaire à la feuille de dessin. La rampe 42, qui n'est pas visible à la fig. 3, est portée par la pièce 35 et est solidaire d'un bras coopérant avec un profil de came, ces pièces étant réalisées de la même façon que le bras 39 et le profil de came 41 de la fig. 3.

De cette façon, on obtient pour tout déplacement de la table à mouvements croisés une correction appropriée de l'orientation de la tête 23 pour qu'elle reste constamment dirigée vers le guide 22, afin que le jet de fluide soit toujours coaxial à la portion du fil 2 qui est active pour l'usinage.

Dans la forme d'exécution représentée, le guide 22 était fixe, mais il est clair que l'on pourrait le remplacer par une tête de guidage et d'injection, l'injection se faisant alors aux deux extrémités de la zone d'usinage. Dans ce cas la tête d'injection située sous la pièce 1 pourrait être reliée à la tête d'injection supérieure par des moyens mécaniques ou électriques de façon à donner à la tête d'injection inférieure une orientation correspondant à celle de la tête d'injection supérieure.

## Revendications

1. Dispositif pour orienter une tête d'injection et de guidage (23) d'une électrode-fil (2) dans une machine à découper une électrode pièce (1) par décharges électriques érosives, cette machine comprenant un support pour deux guides (21, 22) de l'électrode-fil, un support pour la pièce à découper, des moyens pour produire un déplacement relatif entre ces supports afin d'obtenir la forme désirée, de la découpe, des moyens (24, 25) permettant de déplacer la tête de guidage par rapport à son support dans des directions transversales à l'axe longitudinal de l'électrode-fil et des moyens pour orienter, à partir de ces déplacements transversaux, la tête suivant l'axe de la portion de fil comprise dans la zone d'usinage, caractérisé en ce que la tête de guidage (23), déplaçable est montée sur un plateau articule (32) par un joint universel (33, 34) autour d'un point fixe par rapport au support prévu pour le fil-électrode, ce plateau (32) étant solidaire de deux doigts (37, 43) prenant appui respectivement contre deux surfaces inclinées (38, 42) stationnaires par rapport au dit support, ces surfaces étant orientées de façon que tout déplacement transversal du plateau (32) provoque un déplacement angulaire de la tête de guidage orientable, pour la maintenir toujours dirigée suivant l'axe de ladite portion du fil.

2. Dispositif selon la revendication 1, comportant des moyens (35) pour modifier la distance entre cette tête de guidage (21, 23) et l'autre guide (22), caractérisé en ce qu'il comporte des moyens mécaniques à profil de came (40), palpeur (41) et levier (39) pour varier l'inclinaison desdites surfaces (38) an fonctions de cette distance.

## Patentansprüche

1. Vorrichtung zum Orientieren eines Injektions- und Führungskopfes (23) eines Elektrodendrahtes (2) in einer Maschine zum funkenerosiven Drahtschneiden eines Elektrodenwerkstückes (1), wobei diese Maschine versehen ist mit einer Tragstütze für zwei Führungen (21, 22) des Elektrodendrahtes, einer Tragstütze für das zu bearbeitende Werkstück, mit Mitteln um eine relative Verschiebung zwischen diesen Tragstützen in der Weise zu erzeugen, um die gewünschte Schnittform zu erhalten, mit Mitteln (24, 25), die es erlauben, den Führungskopf in bezug auf seine Tragstütze in zur Drahtlängsachse querlaufenden Richtungen zu verschieben, und mit Mitteln, um den Führungskopf, von diesen Querverschiebungen ausgehend, nach der Achse des sich in der Bearbeitungszone befindenden Drahtteilstückes zu richten, dadurch gekennzeichnet, daß der verschiebbare Führungskopf (23) auf einer Platte (32) angebracht ist, die anhand eines Kreuzgelenkes (33, 34) auf einem in bezug auf die für den Elektrodendraht vorgesehene Tragstütze ortsfesten Punkt gelagert ist, wobei diese Platte (32) mit zwei Bolzen (37, 43) fest verbunden ist, welche sich beziehungsweise auf zwei in bezug auf die benannte Tragstütze ortsfeste schiefe Flächen (38, 42) abstützen, und wobei diese Flächen so gerichtet sind, daß eine beliebige Querverschiebung der Platte (32) eine Winkelverschiebung des richtbaren Führungskopfes bewirkt, um diesen stetig nach der Achse des benannten Drahtteilstückes ausgerichtet zu halten.

2. Vorrichtung nach Anspruch 1, die Mittel (35) zur Veränderung der Distanz zwischen diesem Führungskopf (21, 23) und der anderen Führung (22), aufweist, dadurch gekennzeichnet, daß sie mit Nockenprofil (40), Fühler (41) und Hebel (39) versehene Mittel aufweist, um die Neigung der benannten Flächen (38) in Abhängigkeit dieser Distanz zu verändern.

## Claims

1. A device for orienting an injection and guiding head (23) for an electrode wire (2) in a machine for cutting an electrode workpiece (1) by erosive electric discharges, this machine comprising a support for two guides (21, 22) of the electrode wire, a support for the workpiece, means (24, 25) for displacing the guiding head relative to its support in two directions which are transverse to the longitudinal axis of the electrode wire, and means for orienting, form these transverse displacements, the head in the direction of the axis of the wire portion which is included in the machining zone, characterized in that the movable guiding head (23) is mounted on a plate (32) which is connected by a universal joint (33, 34) to a point which is immobile with respect to the support provided for the electrode wire, this plate (32) being integral with two fingers (37, 43) which support respectively on two inclined surfaces (38, 42), which are stationary with respect to said support, these surfaces being oriented in such a way that every transverse displacement of the plate (32) causes an angular displacement of the orientable guiding head, in order to always maintain the latter oriented in the direction of the axis of said wire portion.

2. A device according to claim 1, comprising means (35) for modifying the distance between this guiding head (21, 23) and the other guide (22), characterized in that it comprises mechanical means with came profile (40), feeler (41) and lever (39) for varying the shape of said surfaces (38) as a function of this distance.

# FIG. 1

# FIG. 2

# FIG. 3

# FIG. 4